# EUROPÄISCHE PATENTSCHRIFT

(11) **EP 0 591 688 B1**
(45) Veröffentlichungstag und Bekanntmachung des Hinweises auf die Patenterteilung: **16.10.1996**
(21) Anmeldenummer: 93114238.4
(22) Anmeldetag: 06.09.1993
(51) Int. Cl.: A01F 12/44, A01F 7/06

(54) **Selbstfahrender Mähdrescher**
Self-propelled combine
Moissonneuse-batteuse automatrice

(30) Priorität: 28.09.1992 DE 4232450
(43) Veröffentlichungstag der Anmeldung: 13.04.1994
(73) Patentinhaber: CLAAS Kommanditgesellschaft auf Aktien, 33428 Harsewinkel (DE)
(72) Erfinder: Tophinke, Franz, D-33428 Harsewinkel (DE); Stövesand, Josef, D-33428 Harsewinkel (DE); Heidjann, Franz, D-33428 Harsewinkel (DE); Dammann, Johannes, D-33428 Harsewinkel (DE)

(56) Entgegenhaltungen:
- EP-A- 0 468 160
- CA-A- 1 166 112
- DE-A- 2 000 605
- DE-A- 3 214 161
- DE-C- 3 601 359
- FR-A- 2 517 170
- GB-A- 2 025 745
- GB-A- 2 122 065
- US-A- 4 665 929
- US-A- 4 875 890

## Beschreibung

Die Erfindung betrifft einen selbstfahrenden Mähdrescher mit einer Schneidwerksmulde und einem dieser nachgeordneten Schrägförderer, von wo aus das Erntegut einer im Radialfluß arbeitenden, aus Dreschkorb und Trommel bestehenden Drescheinheit und das größtenteils ausgedroschene Stroh im Anschluß daran mittels einer Übergabetrommel zumindest einer im Axialfluß entgegen der Fahrtrichtung des Mähdreschers fördernden, aus mindestens einem Trennrotor und einem Trenngehäuse gebildeten Trenneinheit zugeführt wird, wobei die der Dreschtrommel nachgeschaltete Übergabetrommel teilweise von ihrem äußeren wirksamen Trommeldurchmesser angepaßten Einlaufblechen umgeben ist, an die sich Überleitbleche anschließen, die den Zwischenraum zwischen den Einlaufblechen und dem Trenngehäuse der Trenneinheit überbrücken.

Ein derartiger Mähdrescher ist beispielsweise aus der DE 36 01 359 C2 bekannt, der, wie die Praxis geZeigt hat, im allgemeinen zufriedenstellend arbeitet. Allerdings ist, um allen Erntebedingungen gerecht werden Zu können, ein hoher Kraftaufwand erforderlich. Dies liegt darin begründet, daß unvermeidbare, sich bereit im Mähtisch bildende Gutportionen nicht aufgelöst werden, vor dem sie die nachfolgenden Bearbeitungs- und Transportorgane durchlaufen. Neben den dadurch entstehenden Belastungsspitzen im Antriebssystem und der folglich ungleichmäßigen, durchlaufenden Gutmatte entstehen Körnerverluste, indem Körneranteile im Verbund mit den Gutportionen die Erntemaschine verlassen. Die nachteilige Portionenbildung wird also durch die Dreschtrommel fortgesetzt, sogar erhöht, da die Trommel mit gradlinigen, parallel zueinander verlaufenden Dreschleisten besetzt ist, die beispielsweise bei 5 am Umfang verteilten Leisten jeweils bei einer Trommelumdrehung schlagartig auf das Erntegut einwirken, dieses zusammenpressen, abreißen und weiterfördern. Eine Wiederholung dieses Vorganges findet bei der Gutübergabe an die Überleittrommel statt, und zwar unabhängig davon, ob diese mit parallel und gradlinig verlaufenden Leisten besetzt ist (DE 32 14 161 A1) oder ob die Leisten einen bogenförmigen Verlauf aufweisen (DE 36 01 359 C2), in keinem Fall findet eine gleichmäßige ausreichende Gutauflösung statt.

Der vorliegenden Erfindung liegt daher das Problem zugrunde, einen Mähdrescher der eingangs näher bezeichneten Art so auszubilden, daß das Erntegut gleichmäßig und aufgelockert die Maschine durchläuft und die Überleitung des Gutes zu den einzelnen Bearbeitungsstationen auf gutschonende Weise erfolgt, um somit Stau zu vermeiden und den Gesamtantrieb vor Drehmomentspitzen zu schützen und um eine optimale Kornabscheidung zu erreichen.

Diese vorstehenden Aufgaben werden dadurch gelöst, daß die Dreschtrommel am Umfang verteilt, versetzt zueinander angeordnete Dreschsegmente aufweist und daß auch die Übergabetrommel an ihrem der Einzugsöffnung des Trenngehäuses vorgelagerten Bereich mit Mitnehmern besetzt ist, die, wie die Dreschsegmente der Dreschtrommel ebenfalls am Umfang verteilt und versetzt zueinander angeordnet sind. Eine derartige Anordnung von Mitnehmern bewirkt, daß sowohl die Dreschtrommel wie auch die Übergabetrommel in ihrem entsprechenden Bereich über ihren gesamten Umfang gleichmäßig förderwirksam sind, so daß die zugeführte Gutmatte optimal aufgelockert und gleichmäßig verteilt transportiert wird. Drehmomentspitzen treten somit hier nicht mehr auf und die Kornverluste werden vermieden. Auf vorteilhafte Weise ist dabei die Dreschtrommel als vollzylindrischer Hohlkörper ausgebildet, mit dem die Dreschsegmente über Halter verbunden sind. Ebenso kann auch die Übergabetrommel als vollzylindrischer Hohlkörper ausgebildet sein, der in seinem, der Eingangsöffnung des Trenngehäuses vorgelagerten Bereich mit Mitnehmern besetzt ist.

Nach einem weiteren wesentlichen Merkmal der Erfindung ist der Trennrotor der Trenneinheit mit sägezahnartigen Leisten besetzt, wobei jeder n-te Zahn einer Leiste gegenüber den anderen erhöht ist und n der Anzahl der auf den Rotor aufgesetzten Leisten entspricht, und zwar derart versetzt, daß die erhöhten Zähne aller Leisten eine den Rotor wendelförmig umlaufende Linie bilden. Eine solche Ausbildung bewirkt, daß das aufgelockerte und gleichmäßig zugeführte Erntegut auch die Trenneinheit als gleichmäßig aufgelockerte Gutmatte durchläuft. Die Gutmatte wird nämlich in zwei Ebenen erfaßt, und zwar um einen in der Rotationsebene, die durch die niedrigen Zähne gebildet ist und zum anderen durch die Rotationsebene, die durch die hohen Zähne gebildet wird, Es entstehen folgedessen auch im Antriebsbereich für die Trenneinheit keine hohen Drehmomentspitzen und keine Gutportionen mit sogenannten Korneinschlüßen. Die Umlaufgeschwindigkeit der Dreschtrommel, der Übergabetrommel und des Trennrotors stehen in einem ständig gleichbleibenden Verhältnis zueinander, wodurch ein gleichmäßiger Durchfluß gewährt ist. Zwecks Anpassung an unterschiedliche Fruchtarten oder Ernteverhältnisse ist es besonders vorteilhaft, alle drei Rotoren über ein gemeinsames Keilriemen-Regelgetriebe anzutreiben. Um Baulänge einzusparen, kann die Dreschtrommel und die Übergabetrommel als eine Einheit ausgebildet, welche aus einem zylindrischen Grundkörper besteht, der in seinem der Einzugsöffnung des Trenngehäuses vorgelagertem Bereich mit versetzt zueinander angeordneten Mitnehmern besetzt ist, wobei der zylindrische Grundkörper zu beiden Seiten neben der Einzugsöffnung mit wendelförmig den Grundkörper umfassenden Dreschsegmenten besetzt ist. Dabei ist es zwecks Erhöhung des Wirkungsgrades von Vorteil, wenn der zylindrische Grundkörper in den beiden Bereichen, in denen er mit Dreschsegmenten besetzt ist, Schlagleisten aufweist, die vorzugsweise schräg zur Zuführrichtung des Erntegutes verlaufen. Je nach zu erntender Gutart kann es zweckmäßig sein, die Dreschleisten nicht einstückig, sondern aus mehreren hintereinander angeordneten Dreschelementen auszubilden. Um zu erreichen, daß die Übergabe des Gutes an die im Axialfluß arbeitende Trenneinrichtung auf das Gut schonende Weise erfolgt sind nach einem wesentlichen Merkmal der Erfindung die Einlaufbleche in Rotationsrichtung der Übergabetrommel gesehen an ihren vorderen Kanten schmaler als an ihren hinteren Kanten. Dabei haben die einander zugewandten Ränder der Einlaufbleche in Rotationsrichtung der Übergabetrommel betrachtet anfänglich ihren größten Abstand voneinander, um daraufhin bis zu ihrem geringsten Abstand aufeinander zuzuverlaufen. Auf diese Weise wird erreicht, daß das Erntegut, sobald es die Einlauföffnung der Trenneinheit erreicht hat, weich und etwa auf der halben Höhe der Einlaßöffnung nahezu völlig eingezogen ist. Dies beruht unter anderem darauf, daß einerseits die Einlaufbleche in diesem Bereich schmal und die daran anschließenden den Raum zwischen den Einlaufblechen und dem Trenngehäuse überbrückenden Überleitbleche relativ langgestreckt sind, so daß die Richtungsumlenkung des Erntegutes nicht allzu abrupt erfolgt.

Weitere vorteilhafte Ausführungen der Erfindung sind in den weiteren Unteransprüchen definiert.

Im folgenden soll die Erfindung anhand eines Ausführungsbeispieles und mehrere dieses schematisch darstellender Figuren näher erläutert werden. Dabei zeigt:

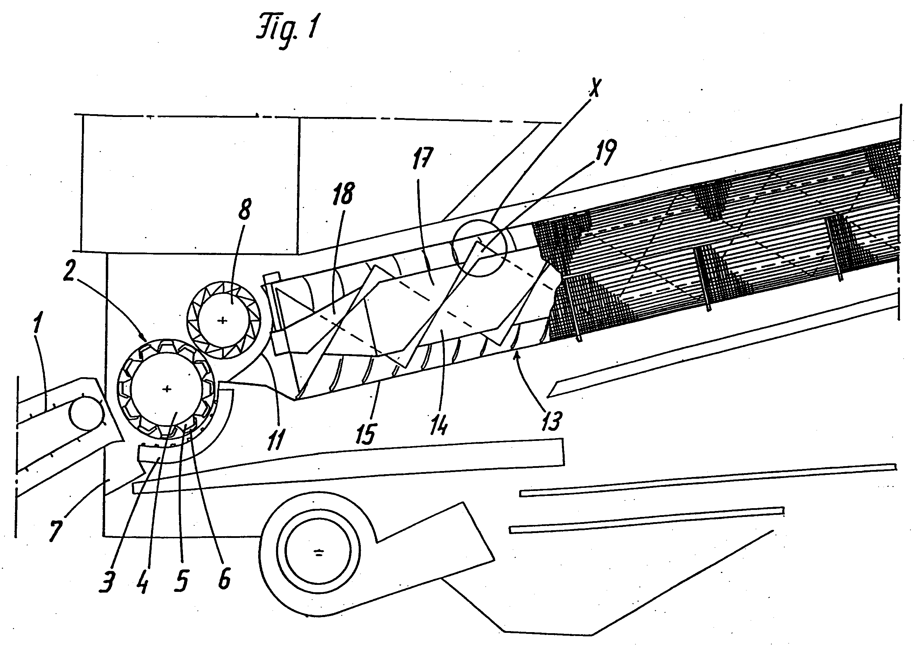

- Figur 1: den dresch- und abscheidewirksamen Teil eines selbstfahrenden Mähdreschers in der Seitenansicht,
- Figur 2: den in Figur 1 dargestellten Teil in Draufsicht,
- Figur 3: den vorderen Teil des in Figur 1 dargestellten Teiles in vergrößerter Darstellung,
- Figur 4: die in Figur 3 dargestellte Ausführungsform in abgewandelter Form,
- Figur 5: den in Figur 1 mit (x) gekennzeichneten Ausschnitt in vergrößerter Darstellung, wobei die Leitsten 19 in gradlinig, gestreckter Form dargestellt sind.
- Figur 6: die Dreschtrommel gemäß Figur 1 in perspektivischer Darstellung,

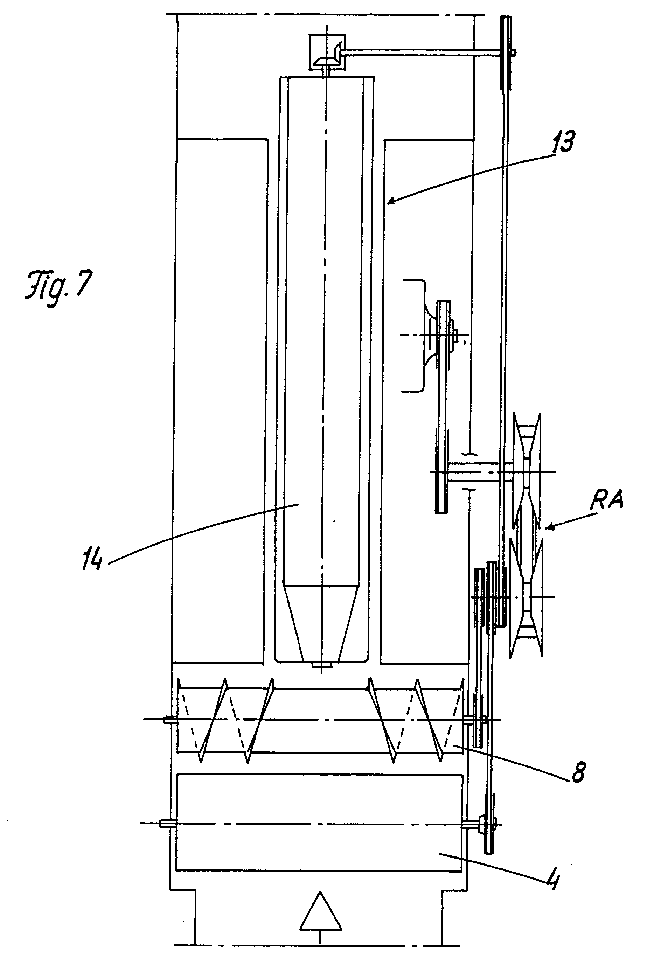

- Figur 7: ein Antriebsschema für einen gemeinsamen regelbaren Antrieb,
- Figur 8: den in Figur 1 dargestellten dresch- und abscheidewirksamen Teil in gekürzter Bauform,

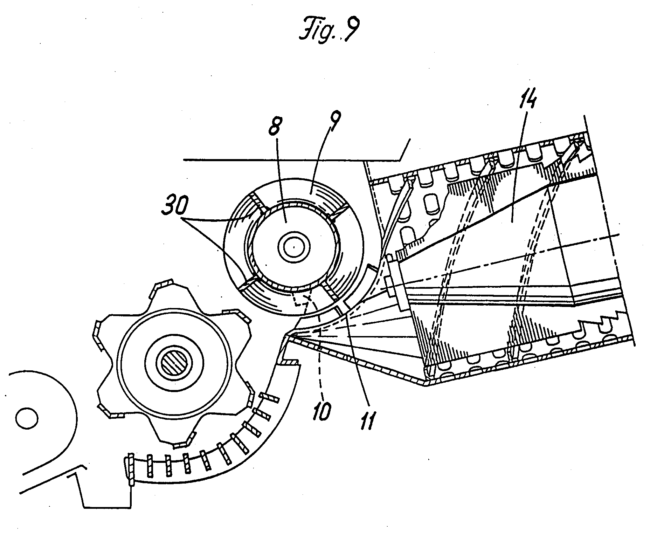

- Figur 9: den in Figur 1 dargestellten dresch- und abscheidewirksamen Teil in einem weiteren abgewandelten Ausführungsbeispiel und
- Figur 10: die in Figur 9 dargestellte Baugruppe in perspektivischer Darstellung, wobei die Dresch- und Übergabetrommeln sowie die Trenntromme in strichpunktierten Linien angedeutet sind.

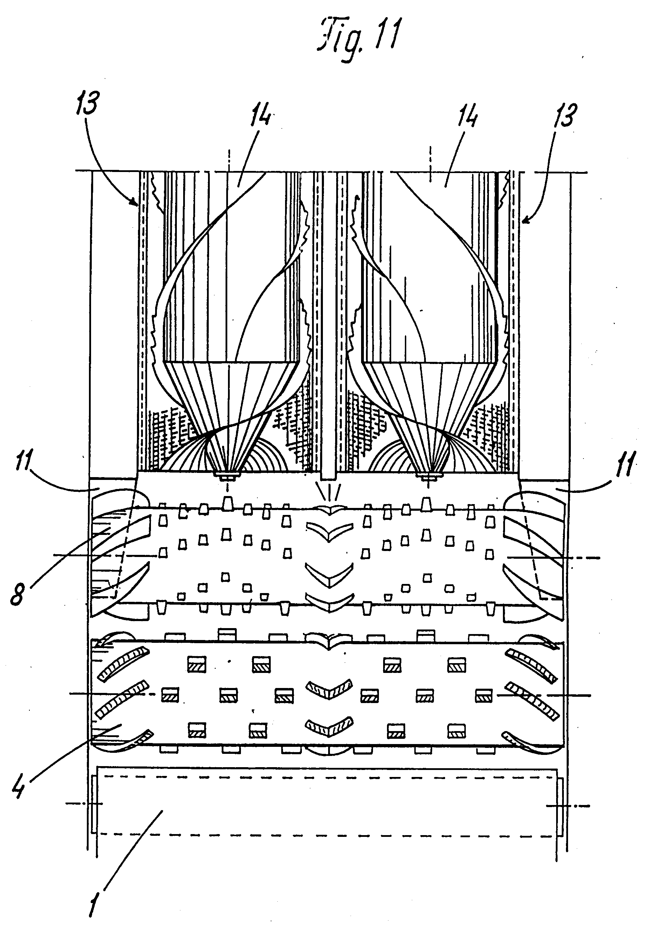

- Figur 11: den in den Figuren 1 und 2 dargestellten Bereich eines Mähdreschers 11 als Doppel-Trennrotor Anlage.

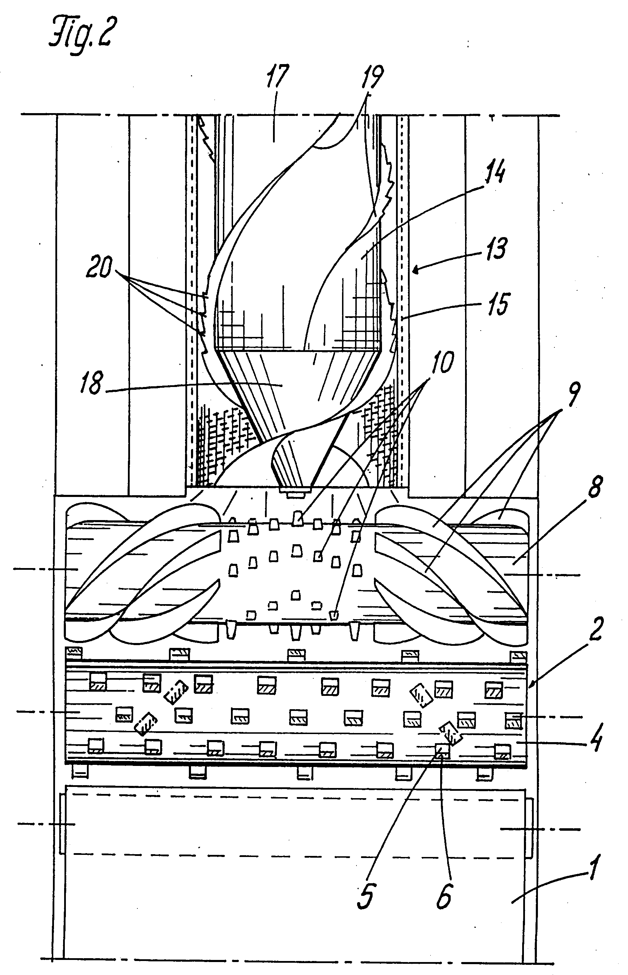

Mit 1 ist ein Schrägförderer eines nicht näher dargestellten selbstfahrenden Mähdreschers bezeichnet, von dem aus das Erntegut einem quer zur Fahrtrichtung angeordnetem Dreschwerk 2 zugeführt wird. Dieses Dreschwerk 2 besteht aus einem Dreschkorb 3 und einer Dreschtrommel 4. Letztere ist als vollzylindrischer Körper ausgebildet, auf den versetzt zueinander Halter 5 aufgeschweißt sind. Mit diesen Haltern 5 können je nach der zu erntenden Gutart unterschiedlich ausgebildete Dreschsegmente 6 aufgeschraubt werden. Evtl. vom Schrägförderer 1 im Gutstrom herangeführte Steine werden in eine dem Dreschwerk 2 vorgeordnete Steinfangmulde 7 abgeschieden, um Schäden am Dreschwerk zu vermeiden. Der vom Dreschwerk im Radialfluß teilweise ausgedroschene und gleichzeitig bezogen auf die Gutzufuhr vergleichmäßigte Gutstrom gelangt zu einer unmittelbar an das Dreschwerk anschließenden Übergabetrommel 8. Diese Übergabetrommel 8 ist, wie die Figur 2 erkennen läßt, ebenfalls wie die Dreschtrommel vollzylindrisch ausgebildet und in ihren beiden Endbereichen mit dem Strohstrom von außen nach innen führenden Blechen 9 sowie in ihrem mittleren Bereich mit versetzt zueinander angeordneten Mitnehmern 10 besetzt. Sie wird von einem Einlaufblech 11 teilweise umfaßt, wobei das Einlaufblech 11 dem äußeren wirksamen Trommelmantel der Übergabetrommel angepaßt ist. Das Einlaufblech 11 ist mit Leitschienen 12 besetzt. Eine solche Ausbildungsform verhindert eine Staubildung im Bereich der Übergabe zur Trenneinheit 13. Die Gutübergabe von der Übergabetrommel 8 zu dem Trennrotor 14 sowie der Gutfluß in der Trenneinheit 13wird von auf dem inneren Umfang des Trenngehäuses 15 verteilt angeordnete Leitschienen 16 unterstützt.

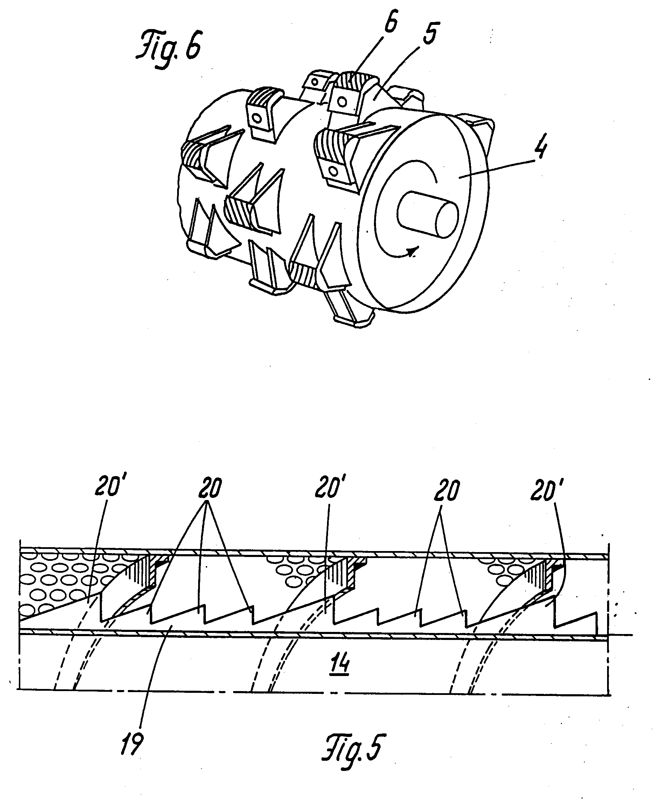

Wie aus den Figuren 2, 5 zu erkennen ist, besteht der Rotor 14 aus einem vollzylindrischen Grundkörper 17, der eingangsseitig einen kegelstumpfförmigen Ansatz 18 aufweist. Der Ansatz 18 wie auch der Grundkörper 17 sind mit mehreren gleichmäßig am Umfang verteilt angeordneten sägezahnförmigen Leisten 19 besetzt, welche im zylindrischen Bereich der Trenntrommel 14 sägezahnförmig ausgebildet sind und einen wendelförmigen Verlauf aufweisen. Von den Zähnen 20 dieser Leisten 19 ist z.B. jeder vierte Zahn 20' einer Leiste erhöht, und zwar derart, daß lediglich bezogen auf die erhöhten Zähne 20' z. B. aller 4 Leisten 19, diese einen wendelförmigen verlauf aufweisen. Eine derartige Anordnung bewirkt, daß sowohl die kurzen Zähne 20 wie auch die langen Zähne 20' jeweils eine Förderebene bilden. Demzufolge ist also eine neben der von den kurzen Zähnen 20 gebildeten "Förderebene" eine zweite, von den höheren Zähnen 20' gebildete "höhere Förderebene" vorhanden, wodurch ein gleichmäßiger, mehrschichtiger Gutfluß durch die Trenneinheit 13 gewährleistet ist.

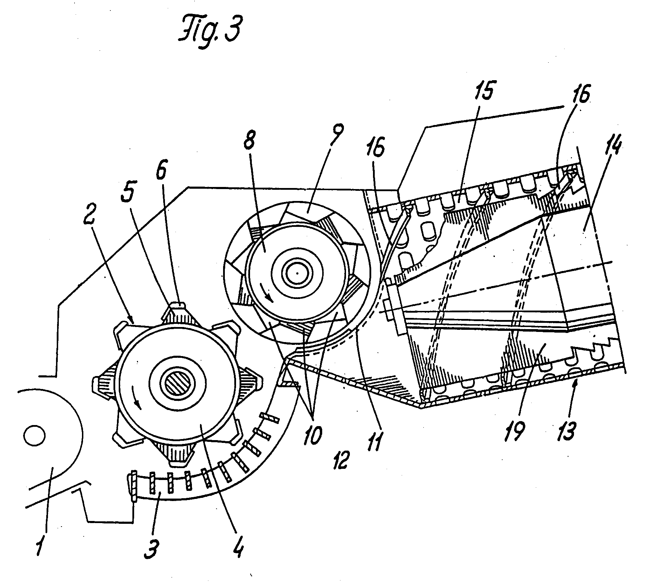

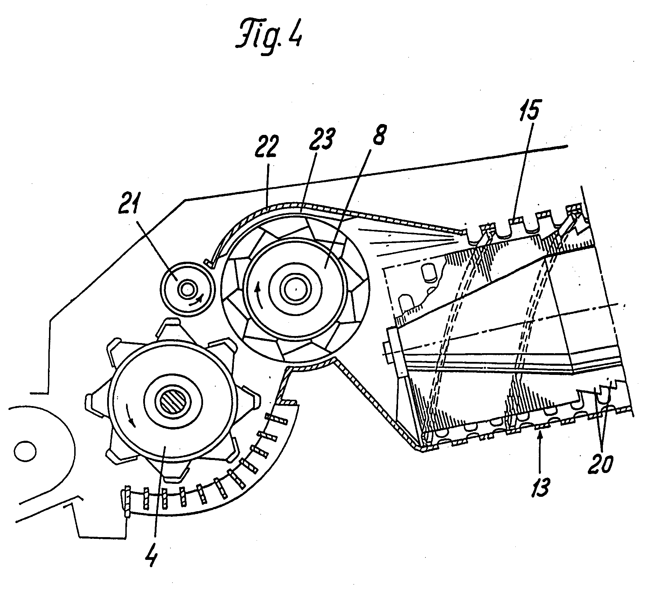

Im Gegensatz zu der in Figur 3 dargestellten Arbeitsweise von Dreschtrommel 2 und Übergabetrommel 8 (sie arbeiten beide im Gegenuhrzeigersinn,, also unterschlächtig) kann, wie die Figur 4 zeigt, die Übergabetrommel 8 im Gegensatz zur Dreschtrommel 4 im Uhrzeigersinn, also über Kopf arbeiten. In einem solchen Fall ist es erforderlich, der Übergabetrommel 8 eine Leittrommel 21 mit vorzugsweise glattem Zylindermantel zuzuordnen, wodurch erreicht wird, daß das Erntegut einwandfrei von der Dreschtrommel 4 an die Übergabetrommel 8 übergeben wird. Letztere wird dabei im oberen Bereich von einem Führungsblech 22 abgedeckt, welches sich an das Trenngehäuse 15 anschließt. Das Führungsblech 22 kann mit Leitschienen 23 zu bestückt sein.

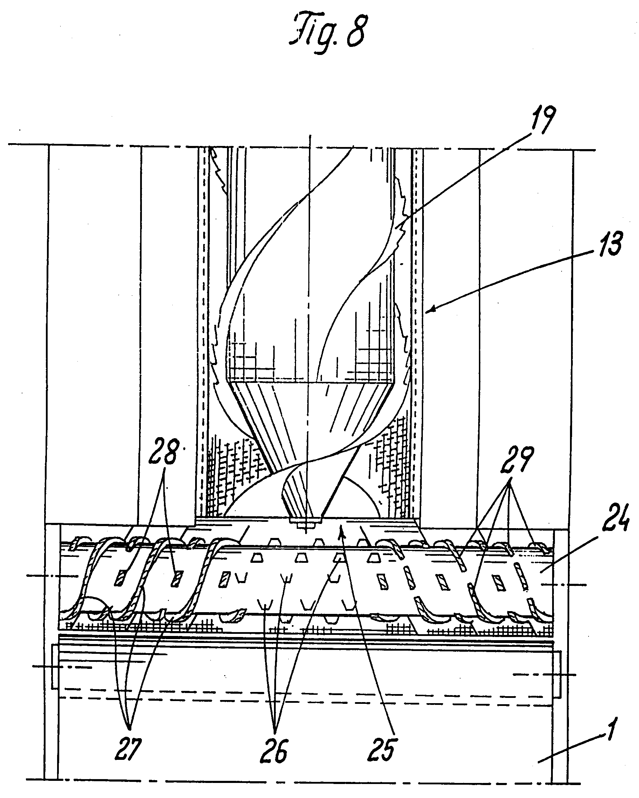

Aus Figur 8 ist zu erkennen, daß zwischen dem Schrägförderer 1 und der Trenneinheit 13 lediglich eine zylindrische Trommel 24 angeordnet ist, die sowohl die Funktion als Dreschtrommel wie auch die Funktion als Übergabetrommel erfüllt. Zu diesem Zweck ist die zylindrische Trommel 24 in ihren beiden der Einzugsöffnung 25 der Trenneinheit 13 vorgelagerten Bereich mit versetzt zueinander angeordneten Mitnehmern 26 besetzt, wobei der Grundkörper 24 zu beiden Seiten neben der Einzugsöffnung 25 mit wendelförmig den Grundkörper umfassenden Dreschleisten 27 besetzt ist. In den Zwischenräumen zwischen den Dreschleisten 27 sind Schlagleisten 28 angeordnet, die vorzugsweise schräg zur Zuführrichtung des Erntegutes verlaufen. Wie aus der rechten Hälfte der Figur zu erkennen, müssen die Dreschleisten 27 nicht einstückig ausgebildet sein, sie können vielmehr je nach zu erntender Gutart aus mehreren hintereinander angeordneten Dreschelementen 29' bestehen.

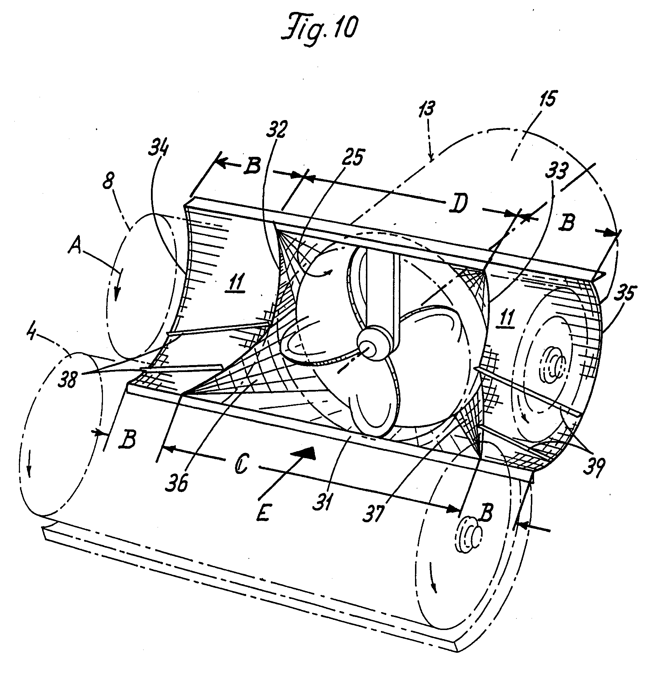

In den Zeichnungsfiguren 9 und 10 ist eine weitere, den Gutfluß positiv beeinflussende Ausbildung der Übergabezone zwichen der Übergabetrommel 8 und der Trenneinheit 13 dargestellt. Hierbei ist die Übergabetrommel 8, wie dies auch die OS-36 01 359 zeigt, in ihren beiden Endbereichen mit den Strohstrom von außen nach innen führenden Schneckenwendeln 9 und in ihrem mittleren Bereich zwischen den Wendeln mit parallel zur Drehachse der Übergabetrommel verlaufenden Wurfblechen 30 oder Mitnehmern 10 besetzt, die die Weitergabe des Gutstromes in den Trennrotor 14' übernehmen. Wie insbesondere aus Figur 10 zu erkennen ist, ist die Übergabetrommel 8' von zwei Einlaufblechen 11 teilweise umfaßt, die zu beiden Seiten der Einlaßöffnung 25 der Trenneinheit 13 angeordnet und von einem Rahmen 31 gehalten sind. Die Breite "B" der Einlaufbleche 11 ist dabei in Rotationsrichtung "A" der Übergabtrommel 4 betrachtet zunächst klein und wächst dann auf ihr Größtmaß an, wobei der Abstand der einanderzugewandten Ränder 32 und 33 der Einlaufbleche 11 ebenfalls in Rotationsrichtung der Übergabetrommel 8' betrachtet, anfangs ihren größten Abstand "C" und auslaufseitig den geringsten Abstand "D" voneinander aufweisen. In dem in Figur 10 dargestellten Ausführungsbeispiel verringert sich der Abstand "C" gleichmäßig auf das Maß "D", welches in etwa nach der ersten Hälfte der Bogenlänge der Einlaufbleche 11 erreicht ist. Im Bereich der zweiten Hälfte der Bogenlänge der Einlaufbleche 11 verlaufen die äußeren Ränder und die Ränder 32, 33 parallel zueinander. Selbstverständlich können sich die Einlaufbleche auch über ihre gesamte Bogenlänge gleichmäßig oder stufenförmig verbreitern. In jedem Fall sind die inneren Ränder 32 und 33 ebenso wie die obere und untere Begrenzung des Rahmens 31 mit dem Trenngehäuse 15 der Trenneinheit 13 durch Überleitbleche 36, 37 verbunden. Da die Ränder 32 und 33 im Guteinlaufbereich "E" einen relativ großen Abstand voneinander aufweisen, ist der Gutübergang in diesem Bereich aufgrund der sich hier mit sehr flachen Winkeln anschließenden Überleitbleche 36, 37 sehr weich und dennoch intensiv, so daß der größte Teil der zugeführten Gutmatte bereits hier in die Trenneinheit 13 gelangt, wo in bekannter Weise die Restkornausscheidung stattfindet. Der Vorteil eines solchen Verlaufes der Einlaufbleche 11 bzw. der Überleitbleche 36, 37 ist demzufolge einmal in dem weichen Gutübergang von der Übergabetrommel zur Trenneinheit 13 und zum anderen darin zu sehen, daß selbst bei kurzzeitiger erhöhter Gutzufuhr keine Staugefahr besteht, weil im Einlaufbereich "E" bereits der Großteil des zugeführten Gutes eingezogen wird, so daß im abschließenden Bereich noch genügend Einzugsreserven vorhanden sind. Unterstützt wird der Einzug noch von Leitschienen 38, 39, mit denen die Einlaufflächen 11 besetzt sind. Die Zeichnungsfigur 11 zeigt eine Dresch- und Trenneinrichtung bei der zwecks Erhöhung der Durchsatzleistung zwei achsparallel zueinander angeordnete Trennrotoren mit je einem zugehörigen Gehäuse dargestellt sind.

Die Gestaltung der Dreschtrommel (4) sowie der ihr nachgeschalteten Übergabetrommel (8) ist bei dieser Ausführung so gewählt, daß der einlaufende Gutstrom möglichst aufgeteilt, den beiden Trennrotoren zugeführt wird. Aus diesem Grunde sind beide Trommeln (4 und 8) mittig zwischen ihren Enden mit, den Gutstrom teilenden Dreschsegmenten bzw. Mitnehmern bestückt. Alle zuvor beschriebenen Merkmale kommen auch bei dieser Doppel-Trennrotor Anlage zur Anwendung.

## Patentansprüche

1. Selbstfahrender Mähdrescher mit einer Schneidwerksmulde und mit einem dieser nachgeordneten Schrägförderer, von dem aus das Erntegut einer im Radialfluß arbeitenden, aus Dreschkorb und Dreschtrommel bestehenden Drescheinheit, und das größtenteils ausgedroschene Stroh im Anschluß daran mittels einer Übergabetrommel einer im Axialfluß entgegen der Fahrtrichtung des Mähdreschers fördernden, aus mindestens einem Trennrotor und einem Trenngehäuse gebildeten Trenneinheit zugeführt wird, wobei die Übergabetrommel teilweise von ihrem äußeren wirksamen Trommeldurchmesser angepaßten Einlaufblechen umgeben ist, an die sich Überleitbleche anschließen, die den Zwischenraum zwischen den Einlaufblechen und dem Trenngehäuse der Trenneinheit überbrücken,
**dadurch gekennzeichnet,**
daß die Dreschtrommel (4) am Umfang verteilt, versetzt zueinander angeordnete Dreschsegmente (6) aufweist und daß auch die Übergabetrommel (8) in ihrem der Einzugsöffnung(en) des (der) Trenngehäuses (15) vorgelagerten Bereich mit Mitnehmern (10) besetzt ist, die, wie die Dreschsegmente (6) der Dreschtrommel (4), ebenfalls am Umfang verteilt und versetzt zueinander angeordnet sind.

2. Selbstfahrender Mähdrescher nach Anspruch 1,
**dadurch gekennzeichnet**,
daß die Dreschtrommel (4) als vollzylindrischer Körper ausgebildet ist, mit dem die Dreschsegmente (6) über Halter (5) verbunden sind.

3. Selbstfahrender Mähdrescher nach Anspruch 1,
**dadurch gekennzeichnet,**
daß die Übergabetrommel (8) als vollzylindrischer Körper ausgebildet ist, der in seinem, der Einzugsöffnung des Trenngehäuses (15) vorgelagerten Bereich mit Mitnehmern (10) besetzt ist.

4. Selbstfahrender Mähdrescher nach den Ansprüchen 1-3,
**dadurch gekennzeichnet**,
daß der Trennrotor (14) der Trenneinheit (13) mit sägezahnartigen Leisten (19) besetzt ist, wobei jeder n-te Zahn einer Leiste gegenüber den anderen erhöht ist, und n der Anzahl der auf den Rotor (14) aufgesetzten Leisten (19) entspricht und zwar derart versetzt, daß die erhöhten Zähne (20') aller Leisten (19) eine den Rotor (14) wendelförmig verlaufende Linie bilden.

5. Selbstfahrender Mähdrescher nach der Ansprüchen 1-4,
**dadurch gekennzeichnet**,
daß die Umlaufgewindigkeiten der Dreschtrommel (4), der Übergabetrommel (8) und des/oder der Trennrotor/en (14) in einem ständig gleichbleibenden Verhältnis zueinander stehen, wobei die Umlaufgeschwindigkeiten durch einen gemeinsamen Keilriemen-Regelantrieb (RA) veränderbar sind.

6. Selbstfahrender Mähdrescher nach den Ansprüchen 1-3,
**dadurch gekennzeichnet**,
daß die Dreschtrommel (4) und die Übergabetrommel (8) als eine Einheit ausgebildet sind, welche aus einem zylindrischen Grundkörper (24) besteht, der in seinem der Einzugsöffnung (25) der Trenneinheit (13) in vorgelagertem Bereich mit versetzt zueinander angeordneten Mitnehmern (26) besetzt ist, wobei der zylindrische Grundkörper (24) zu beiden Seiten neben der Einzugsöffnung (25) mit wendelförmig den Grundkörper (24) überfassenden Dreschleisten (27) besetzt ist.

7. Selbstfahrender Mähdrescher nach Anspruch 6,
**dadurch gekennzeichnet**,
daß jede Dreschleiste (27) aus mehreren hintereinander angeordneten Dreschelementen (29) besteht.

8. Selbstfahrender Mähdrescher nach den Ansprüchen 6+7,
**dadurch gekennzeichnet**,
daß der zylindrische Grundkörper (24) in den beiden Bereichen, in denen er mit Dreschleisten (28,29) besetzt ist, punktartig angeordnete Schlagleisten (28) aufweist, die vorzugsweise schräg zur Zuführrichtung des Erntegutes verlaufen.

9. Selbstfahrender Mähdrescher nach Anspruch 1,
**dadurch gekennzeichnet**,
daß die Einlaufbleche (11) in Rotationsrichtung der Übergabetrommel (8) gesehen an ihren Vorderkanten schmaler sind als an ihren hinteren Kanten.

10. Selbstfahrender Mähdrescher nach Anpruch 9,
**dadurch gekenzeichnet**,
daß die beiden einanderzugewandten Ränder (32, 33) der Einlaufbleche (11) in Rotationsrichtung der Übergabetrommel (8) betrachtet, anfänglich ihren größten Abstand voneinander haben, um daraufhin bis auf ihren geringsten Abstand aufeinander zu verlaufen.

11. Selbstfahrender Mähdrescher nach den Ansprüchen 9+10,
**dadurch gekennzeichnet**,
daß die Einlaufbleche (11) nur bereichsweise mit Leitschienen (38, 39) besetzt sind.

12. Selbstfahrender Mähdrescher nach den Ansprüchen 9 bis 11,
**dadurch gekennzeichnet**,
daß die einanderzugewandten Ränder (32, 33) der Einlaufbleche (11) etwa ab der zweiten Hälfte ihrer Teilummantelfläche in Rotationsrichtung der Übergabetrommel (8) gesehen parallel zueinander verlaufen und ihren geringsten Abstand voneinander aufweisen.

13. Selbstfahrender Mähdrescher nach den Ansprüchen 1 bis 12,
**dadurch gekennzeichnet**,
daß die Trenneinheit (13) aus zwei achsparallel zueinander angeordneten, sich gegensinnig drehenden Trennrotoren (14) mit jedem Rotor getrennt zugeordneten Trenngehäusen besteht.

14. Selbstfahrender Mähdrescher nach den Ansprüchen 1 bis 12,
**dadurch gekennzeichnet**,
daß die zwei Trennrotoren von einem gemeinsamen Gehäuse umgeben sind und die Rotoren gleichsinnig rotieren.

## Claims

1. Self-propelled combine harvester having a cutter hollow and having a seed conveyor which is arranged downstream of the latter and from which the harvested crop is fed to a threshing unit, which operates with radial flow and comprises a concave and a threshing drum, and the mainly threshed straw is then fed, by means of a transfer drum, to a separating unit, which conveys with axial flow counter to the direction of travel of the combine harvester and is formed from at least one separating rotor and one separating housing, the transfer drum being partially enclosed by introduction plates which are adapted to the outer, effective drum diameter and are adjoined by transferring plates which bridge the interspace, between the introduction plates and the separating housing of the separating unit, characterized in that the threshing drum (4) has threshing segments (6) which are distributed on the circumference and are offset with respect to one another, and in that, in its region arranged upstream of the intake opening(s) of the separating housing(s) (15), the transfer drum (8) is also provided with drivers (10) which, just as the threshing segments (6) of the threshing drum (4), are likewise distributed on the circumference and are offset with respect to one another.

2. Self-propelled combine harvester according to Claim 1, characterized in that the threshing drum (4) is designed as a fully cylindrical body to which the threshing segments (6) are connected via retaining means (5).

3. Self-propelled combine harvester according to Claim 1, characterized in that the transfer drum (8) is designed as a fully cylindrical body which, in its region arranged upstream of the intake opening of the separating housing (15), is provided with drivers (10).

4. Self-propelled combine harvester according to Claims 1-3, characterized in that the separating rotor (14) of the separating unit (13) is provided with sawtooth-like strips (19), every nth tooth of a strip being elevated with respect to the other teeth, where n corresponds to the number of strips (19) positioned on the rotor (14), to be precise it is offset such that the elevated teeth (20') of all the strips (19) form a line which runs helically around the rotor (14).

5. Self-propelled combine harvester according to Claims 1-4, characterized in that the ratio of the respective rotational speeds of the threshing drum (4), of the transfer drum (8) and of the separating rotor(s) (14) is constant, it being possible for the rotational speeds to be changed by a common V-belt drive (RA).

6. Self-propelled combine harvester according to Claims 1-3, characterized in that the threshing drum (4) and the transfer drum (8) are designed as a unit which comprises a cylindrical basic body (24) which, in its region arranged upstream of the intake opening (25) of the separating unit (13), is provided with drivers (26) which are offset with respect to one another, the cylindrical basic body (24) being provided at both ends, next to the intake opening (25), with threshing strips (27) which enclose the basic body (24) helically.

7. Self-propelled combine harvester, according to Claim 6, characterized in that each threshing strip (27) comprises a plurality of threshing elements (29) arranged one behind the other.

8. Self-propelled combine harvester, according to Claims 6 and 7, characterized in that, in the two regions in which it is provided with threshing strips (28, 29), the cylindrical basic body (24) has beaters (28) which are arranged in a punctiform manner and preferably run obliquely with respect to the feed direction of the harvested crop.

9. Self-propelled combine harvester, according to Claim 1, characterized in that, as seen in the direction of rotation of the transfer drum (8), the introduction plates (11) are narrower at their leading edges than at their trailing edges.

10. Self-propelled combine harvester, according to Claim 9, characterized in that, as seen in the direction of rotation of the transfer drum (8), the two mutually facing borders (32, 33) of the introduction plates (11) are initially spaced apart by the maximum distance from one another and thereafter run to their smallest mutual distance.

11. Self-propelled combine harvester, according to Claim 9 and 10, characterized in that only certain regions of the introduction plates (11) are provided with directing rails (38, 39).

12. Self-propelled combine harvester according to Claims 9 to 11, characterized in that, as seen in the direction of rotation of the transfer drum (8), it is approximately from the second half of their partial encasing surface that the mutually facing borders (32, 33) of the introduction plates (11) run parallel to one another and are spaced apart by the smallest distance from one another.

13. Self-propelled combine harvester according to Claims 1 to 12, characterized in that the separating unit (13) comprises two separating rotors (14) which are arranged in an axis-parallel manner with respect to one another, rotate in opposite directions and have separating housings assigned separately to each rotor.

14. Self-propelled combine harvester according to Claims 1 to 12, characterized in that the two separating rotors are enclosed by a common housing and the rotors rotate in the same direction.

## Revendications

1. Moissonneuse-batteuse automotrice avec une auge de coupe et avec un transporteur incliné disposé après celle-ci, depuis lequel la récolte est amenée à une unité de battage travaillant dans le sens radial, constituée d'un panier de battage et d'un cylindre de battage, et la paille battue en majeure partie est amenée après cela au moyen d'un cylindre de transfert à une unité séparatrice avançant dans le sens axial dans le sens inverse de l'avance de la moissonneuse-batteuse, formée au moins d'un rotor séparateur et d'un carter séparateur, le cylindre de transfert étant partiellement entouré par des tôles d'entrée adaptées à son diamètre de cylindre actif extérieur, auxquelles se raccordent des tôles de transition, qui recouvrent l'espace intermédiaire entre les tôles d'entrée et le carter séparateur de l'unité séparatrice, caractérisée en ce que le cylindre de battage (4) présente, répartis sur le pourtour, des segments de battage (6) décalés les uns par rapport aux autres, et en ce que le cylindre de transfert (8) est également muni, dans sa partie située avant l'ouverture ou les ouvertures d'insertion du ou des carters séparateurs (15), d'entraîneurs (10) qui, comme les segments de battage (6) du cylindre de battage (4), sont également répartis sur le pourtour et décalés les uns par rapport aux autres.

2. Moissonneuse-batteuse automotrice selon la revendication 1, caractérisée en ce que le cylindre de battage (4) est conçu en tant que corps entièrement cylindrique auquel sont reliés les segments de battage (6) par l'intermédiaire de fixations (5).

3. Moissonneuse-batteuse automotrice selon la revendication 1, caractérisée en ce que le cylindre de transfert (8) est conçu en tant que corps entièrement cylindrique qui est muni d' entraîneurs (10) dans sa partie située avant l'ouverture d'insertion du carter séparateur (15).

4. Moissonneuse-batteuse automotrice selon les revendications 1 à 3, caractérisée en ce que le rotor séparateur (14) de l'unité séparatrice (13) est muni de nervures (19) en forme de dents de scie, chaque n-ième dent d'une nervure étant surélevée par rapport aux autres, n correspondant au nombre des nervures (19) placées sur le rotor (14) et ainsi décalée de telle sorte que les dents surélevées (20') de toutes les nervures (19) forment une ligne parcourant le rotor (14) en hélice.

5. Moissonneuse-batteuse automotrice selon les revendications 1 à 4, caractérisée en ce que les vitesses de rotation du cylindre de battage (4), du cylindre de transfert (8) et du ou des rotors séparateurs (14) restent dans un rapport toujours égal les unes par rapport aux autres, les vitesses de rotation pouvant être modifiées par un variateur de vitesses (RA) commun à une courroie trapézoïdale.

6. Moissonneuse-batteuse automotrice selon les revendications 1 à 3, caractérisée en ce que le cylindre de battage (4) et le cylindre de transfert (8) sont conçus en tant qu'unité constituée d'un corps de base cylindrique (24) qui est muni, dans la partie située avant l'ouverture d'insertion (25) de l'unité séparatrice (13), d'entraîneurs (26) décalés les uns par rapport aux autres, le corps de base cylindrique (24) étant muni des deux côtés près de l'ouverture d'insertion (25) de barres de battage (27) passant sur le corps de base (24) en hélice.

7. Moissonneuse-batteuse automotrice selon la revendication 6, caractérisée en ce que chaque barre de battage (27) est constituée de plusieurs éléments de battage (29) disposés les uns derrière les autres.

8. Moissonneuse-batteuse automotrice selon les revendications 6 et 7, caractérisée en ce que le corps de base cylindrique (24) présente, dans les deux parties où il est muni de barres de battage (28, 29), des battoirs (28) disposés ponctuellement, qui s'étendent de préférence obliquement par rapport à la direction d'avance de la récolte.

9. Moissonneuse-batteuse automotrice selon la revendication 1, caractérisée en ce que les tôles d'entrée (11) sont plus étroites à leur arête avant qu'à leur arête arrière, vu dans le sens de rotation du cylindre de transfert (8).

10. Moissonneuse-batteuse automotrice selon la revendication 9, caractérisée en ce que les deux bords tournés l'un vers l'autre (32, 33) des tôles d'entrée (11), considéré dans le sens de rotation du cylindre de transfert (8), sont d'abord écartés d'une distance maximale l'un de l'autre, pour ensuite s'étendre jusqu'à leur distance d'écartement minimale.

11. Moissonneuse-batteuse automotrice selon les revendications 9 et 10, caractérisée en ce que les tôles d'entrée (11) ne sont munies qu'en partie de barres de guidage (38, 39).

12. Moissonneuse-batteuse automotrice selon les revendications 9 à 11, caractérisée en ce que les bords tournés l'un vers l'autre (32, 33) des tôles d'entrée (11) s'étendent parallèlement l'un à l'autre à partir de la deuxième moitié environ de leur surface externe partielle, vu dans le sens de rotation du cylindre de transfert (8), et y présentent leur distance d'écartement minimale.

13. Moissonneuse-batteuse automotrice selon les revendications 1 à 12, caractérisée en ce que l'unité séparatrice (13) se compose de deux rotors séparateurs (14) tournant dans des sens opposés et dont les axes sont parallèles l'un à l'autre, avec des carters séparateurs affectés séparément à chaque rotor.

14. Moissonneuse-batteuse automotrice selon les revendications 1 à 12, caractérisée en ce que les deux rotors séparateurs sont entourés par un carter commun et que les rotors tournent dans le même sens.
